# EUROPÄISCHE PATENTSCHRIFT

(11) **EP 2 960 561 B1**
(45) Veröffentlichungstag und Bekanntmachung des Hinweises auf die Patenterteilung: **26.10.2016**
(21) Anmeldenummer: 15167932.1
(22) Anmeldetag: 18.05.2015
(51) Int. Cl.: F16K 11/07, F16K 31/06, F16H 61/688, F15B 13/04, F15B 13/044

(54) **HYDRAULIKVENTIL**
HYDRAULIC VALVE
VANNE HYDRAULIQUE

(30) Priorität: 27.06.2014 DE 102014109097
(43) Veröffentlichungstag der Anmeldung: 30.12.2015
(73) Patentinhaber: Hilite Germany GmbH, 97828 Marktheidenfeld (DE)
(72) Erfinder: Boban, Drazen, 72622 Nürtingen (DE); Knecht, Andreas, 72127 Kusterdingen (DE); Maisch, Dieter, 72664 Kohlberg (DE)

(56) Entgegenhaltungen:
- EP-A2- 2 562 773
- DE-A1- 2 608 701
- DE-A1- 3 828 860
- US-A- 5 571 248

## Beschreibung

### Technisches Gebiet

Die Erfindung betrifft ein Hydraulikventil, insbesondere für ein Doppelkupplungsgetriebe eines Kraftfahrzeugs.

### Stand der Technik

Aus der DE 10 2010 023 667 A1 ist ein Hydraulikventil mit einem Ventilgehäuse bekannt. In dem Ventilgehäuse ist eine Stufenbohrung ausgebildet, deren Wandung feinstbearbeitet ist. Ein Stufenkolben ist in der Stufenbohrung verschiebbar geführt angeordnet. In dem Ventilgehäuse sind zwei mit axialem Abstand zueinander radial in die Stufenbohrung mündende Anschlüssen ausgebildet. Ein Abschnitt des Stufenkolbens weist gegenüber der Stufenbohrung einen reduzierten Außendurchmesser auf, der eine Steuernut bildet, wobei zwei axial nebeneinander liegende Anschlüsse je nach axialer Positionierung des Stufenkolbens durch den Stufenkolben voneinander absperrbar und/oder über den Bereich reduzierten Außendurchmessers miteinander verbindbar sind.

Bei Schieberventilen eines Getriebes wie bei dem in der DE 10 2010 023 667 A1 beschriebenen Hydraulikventil besteht für bestimmte Anwendungszwecke die Erfordernis als Ventilschieber einen Stufenkolben zu verwenden, der in einer Stufenbohrung des Ventilgehäuses in seiner verschiedenen Positionen verschiebbar geführt ist. Deshalb ist in dem Ventilgehäuse eine die Stufe großen Durchmessers bildende Bohrung mit feinstbearbeiteter Wandung ausgebildet, in die um einen Teil der Länge der Bohrung eine Buchse mit ihrer zylindrischen Mantelfläche fest eingesetzt ist, deren Innenwandung feinstbearbeitet ist und deren Innenbohrung die Stufe kleinen Durchmessers der Stufenbohrung bildet.

Die Einpressbuchse ist unter axialer Kraftbeaufschlagung bis in ihre Sollposition in die Bohrung des Ventilgehäuses eingeschoben. Zur Verbindung der Innenbohrung der kleinen Stufe der Stufenbohrung mit im Ventilgehäuse ausgebildeten Anschlüssen sind in der Wandung der Buchse ein oder mehrere radial durchgehende Ausnehmungen ausgebildet, die bei eingesetzter Buchse in radialer Überdeckung mit den ihnen jeweils zugeordneten Anschlüssen des Ventilgehäuses sind.

Aus der DE2608701 ist ein Hydraulikventil gemäß dem Oberbegriff des Anspruchs 1 bekannt.

### Offenbarung der Erfindung

Eine Aufgabe der Erfindung ist es, ein Hydraulikventil zu schaffen, insbesondere für ein Doppelkupplungsgetriebe, das es ermöglicht, mehrere Arbeitsanschlüsse auf effektive, kostengünstige und platzsparende Weise bei gutem Regelverhalten zu bedienen.

Die vorgenannte Aufgabe wird mit den Merkmalen des unabhängigen Anspruchs gelöst. Günstige Ausgestaltungen und Vorteile der Erfindung ergeben sich aus den weiteren Ansprüchen, der Beschreibung und der Zeichnung.

Es wird ein Hydraulikventil mit wenigstens zwei Schaltstellungen vorgeschlagen, das ein Ventilgehäuse mit einer Bohrung umfasst, die entlang ihrer Längsrichtung Abschnitte mit unterschiedlichen Durchmessern aufweist, Weiter umfasst das Hydraulikventil einen Versorgungsanschluss zum Zuführen eines Hydraulikfluids, wenigstens einen ersten Arbeitsanschluss und einen zweiten Arbeitsanschluss, wenigstens einen ersten Tankabfluss und einen zweiten Tankabfluss zum Ableiten des Hydraulikfluids aus dem Kolben, sowie einen in der Bohrung in deren Längsrichtung angeordneten Kolben, der an einem Ende mittels einer Feder, die eine Federkraft aufbringt, am Ventilgehäuse abgestützt ist und mit einem Magnetaktor, der zum Aufbringen einer Magnetkraft vorgesehen ist, längsverschiebbar gekoppelt ist.

Dabei verbindet eine erste Steuernut den ersten Arbeitsanschluss wahlweise mit dem ersten Tankabfluss oder mit dem Versorgungsanschluss, während eine zweite Steuernut den zweiten Arbeitsanschluss wahlweise mit dem zweiten Tankabfluss oder mit dem Versorgungsanschluss verbindet. Weiter umfasst das Hydraulikventil einen in Längsrichtung des Kolbens gegen diesen längsverschiebbar angeordneten Stift, der in wenigstens einer Schaltstellung mit der Feder zusammenwirkt, und der hydraulisch mit der zweiten Steuernut verbunden ist. Die erste Steuernut ist durch erste Wirkflächen unterschiedlicher Größe begrenzt. Die größere der ersten Wirkflächen ist in einem ersten Abschnitt mit einem größeren Durchmesser angeordnet und die kleinere der ersten Wirkflächen in einem zweiten Abschnitt mit einem geringeren Durchmesser als im ersten Abschnitt angeordnet. Die zweite Steuernut ist durch zweite Wirkflächen begrenzt, die in dem Abschnitt der Bohrung mit geringerem Durchmesser angeordnet sind.

Eine Kraft auf den Kolben ist dabei proportional zur Differenz der beiden Wirkflächen in dem ersten Abschnitt des Kolbens. Um einen Regelbetrieb des Hydraulikventils zu verwirklichen, ist es nötig, eine entsprechende Gegenkraft zur Verfügung zu stellen, was mit einem Druck auf die Differenz der Wirkflächen realisiert werden kann. Die Differenz ergibt dabei eine effektiv wirksame Fläche. Die Größe der Wirkflächen hängt von den Systemparametern wie Betriebsdrücke des Hydraulikventils, sowie der eingesetzten Feder ab. Die Feder kann beispielsweise eine Schraubendruckfeder sein. Die Wirkung der zweiten Wirkflächen hebt sich gegenseitig auf, da sie gleiche Durchmesser aufweisen.

Aus dem Zusammenspiel der Magnetkraft, der Kraft der Feder und der jeweils beaufschlagten Wirkfläche stellt sich ein Kräftegleichgewicht in den Regelpositionen ein und bestimmt den Ausgangsdruck an den Arbeitsanschlüssen. Dadurch kann, abhängig vom eingeprägten Strom an dem Magnetaktor ein Öldruck an den Arbeitsanschlüssen erzeugt werden. Der Druck verhält sich dabei proportional zum Strom.

Der Stift, der bevorzugt über seine Stirnfläche mit dem Hydraulikfluid beaufschlagt wird, bildet so eine weitere effektive Wirkfläche, die gegen die Magnetkraft wirken kann.

Das Hydraulikventil kann ein Getriebe-Hydraulikventil sein, insbesondere ein Hydraulikventil für ein Doppelkupplungsgetriebe.

Besonders vorteilhaft können mit dem Hydraulikventil zwei Kanäle voneinander unabhängig druckgeregelt werden.

Ein Magnetaktor stellt eine sehr effektive Realisierung einer Antriebsquelle für ein Hydraulikventil dar. Damit können Druckminderventile mit Proportionalverhalten ausgestattet sein, da die Magnetkraft zum angelegten Strom proportional verläuft.

In einer vorteilhaften Ausgestaltung kann das Hydraulikventil wenigsten drei Schaltstellungen aufweisen, wobei in einer ersten Schaltstellung der erste Arbeitsanschluss über den Versorgungsanschluss mit dem Hydraulikfluid beaufschlagt wird und der zweite Arbeitsanschluss mit dem zweiten Tankabfluss verbunden ist, wobei in einer zweiten Schaltstellung der Versorgungsanschluss durch den Kolben verschlossen sowie die beiden Tankabflüsse durch den Kolben verschlossen oder geöffnet sind, wobei in einer dritten Schaltstellung der zweite Arbeitsanschluss über den Versorgungsanschluss mit dem Hydraulikfluid beaufschlagt wird und der erste Arbeitsanschluss mit dem ersten Tankabfluss verbunden ist.

Die erste Schaltstellung, welche von einer Grundstellung des Hydraulikventils bei stromlosem Magnetaktor ausgeht, weist zuerst maximalen Druck des Hydraulikfluids in dem ersten Arbeitsanschluss auf, da der Versorgungsanschluss geöffnet ist. Bei zunehmender Bestromung nimmt der Druck in dem ersten Arbeitsanschluss zunehmend ab, bis in der zweiten Schaltstellung der Versorgungsanschluss ganz verschlossen ist und andererseits der erste Arbeitsanschluss zum Tankabfluss geöffnet ist, sodass der Druck im ersten Arbeitsanschluss auf Null fällt. Der Druck im zweiten Arbeitsanschluss ist ebenfalls auf Null, da auch der zweite Arbeitsanschluss zum zweiten Tankabfluss geöffnet ist.

Mit zunehmender Bestromung des Magnetaktors wird die Feder überdrückt und der Versorgungsanschluss in der dritten Schaltstufe zum zweiten Arbeitsanschluss weiter geöffnet, der Druck des Hydraulikfluids in dem zweiten Arbeitsanschluss steigt weiter an, bis er einen maximalen Wert erreicht, der dem Versorgungsdruck des Hydrauliksystems entspricht, der üblicherweise in Getrieben größer 20 bar beträgt.

In einer vorteilhaften Ausgestaltung kann der Kolben Steuerkanten aufweisen, so dass bei entsprechender Positionierung in einer Regelstellung in Längsrichtung der Versorgungsanschluss sowie die beiden Tankabflüsse verschließbar sind, wobei in der ersten Schaltstellung die Steuerkante des Kolbens am Versorgungsanschluss und die Steuerkante des Kolbens am Tankabfluss gegensinnig mit Regelbewegungen zwischen einer geöffneten und geschlossenen Stellung pendeln sowie in der dritten Schaltstellung die Steuerkante des Kolbens am Versorgungsanschluss und die Steuerkante des Kolbens am Tankabfluss gegensinnig mit Regelbewegungen zwischen einer geöffneten und geschlossenen Stellung pendeln.

In einer Regelstellung der ersten Schaltstellung ist über die Steuerkante am Versorgungsanschluss der Zufluss des Hydraulikfluids zunächst geöffnet, während die Steuerkante am ersten Tankabfluss geschlossen ist. Mit zunehmendem Druck in dem ersten Arbeitsanschluss und an der Differenz der Wirkflächen des Kolbens im ersten Abschnitt verschließt die Steuerkante am Versorgungsanschluss den Zufluss des Hydraulikfluids zunehmend und die Steuerkante zum ersten Tankabfluss öffnet gegensinnig den Abfluss des Hydraulikfluids zunehmend. Der Druck im ersten Arbeitsanschluss fällt ab, der Kolben fährt zurück, die Steuerkante am Versorgungsanschluss öffnet den Zufluss und die Steuerkante am Tankabfluss verschließt diesen wieder. So pendeln die Steuerkanten am Versorgungsanschluss und am Tankabfluss und öffnen und verschließen diese so gegensinnig. Bei einer gegebenen Bestromung des Magnetaktors stellt sich so ein damit korrelierter Hydraulikdruck im ersten Arbeitsanschluss über die Regelung durch die Steuerkanten ein. Die Kraft auf den Kolben über die Differenz der Wirkflächen wirkt dabei der Federkraft entgegen, sodass sich so ein Gleichgewicht einstellt. Die Federkraft beträgt dabei günstigerweise ca. 10 N.

Vorteilhaft kann so über einen Druck des Hydraulikfluids auf die ersten Wirkflächen eine Bewegung des Kolbens in Richtung der ersten Wirkfläche steuerbar sein, wobei eine Stellkraft proportional zu einer Größendifferenz der ersten Wirkflächen sein kann.

Die Regelstellung der dritten Schaltstellung erfolgt in analoger Weise. Der Kolben fährt einen maximalen Hub gegen die Feder, wenn die Magnetkraft des Magnetaktors größer als die Federkraft ist. Die Steuerkante am Versorgungsanschluss öffnet den Zufluss des Hydraulikfluids zum zweiten Arbeitsanschluss. Im zweiten Arbeitsanschluss und an der Wirkfläche des Stifts baut sich ein Druck auf. Der Druck auf die Wirkfläche erzeugt eine Kraftkomponente, die gegen die Magnetkraft wirkt. Der Kolben wird so gegen die Magnetkraft zurück bewegt, sodass die Steuerkante den Versorgungsanschluss wieder verschließt und den zweiten Arbeitsanschluss zum zweiten Tankabfluss öffnet. So sinkt der Druck im zweiten Arbeitsanschluss wieder und damit an der Wirkfläche des Stifts. Der Kolben wird so wieder in Richtung der Magnetkraft bewegt, dass die Steuerkante den Versorgungsanschluss wieder öffnet und der Druck wieder steigt. So wird der Druck des Hydraulikfluids im zweiten Arbeitsanschluss über die Steuerkanten des Kolbens geregelt. Die Kraft der Feder und die Kraft über die Wirkfläche des Stifts wirken dabei gegen die Magnetkraft, sodass sich ein Kräftegleichgewicht in der Regelstellung ergibt. Die Federkraft beträgt günstigerweise z.B. ca. 11 N.

Das erfindungsgemäße Hydraulikventil in seiner Ausführung als Druckminderventil weist den Vorteil auf, dass damit zwei Arbeitsanschlüsse mit Hydraulikfluid versorgt werden können und dabei ein unabhängig geregelter Druckaufbau und Druckabbau in den beiden Arbeitsanschlüssen mit einem einzigen Hydraulikventil und einem einzigen Magnetaktor möglich ist. Zusätzlich kann das Hydraulikventil so ausgelegt sein, dass die auf den Kolben wirkende Magnetkraft und der auf den Kolben wirkende Druck des Hydraulikfluids zusammenwirken und so ein sehr effektiver Betrieb und eine sichere Regelung des Hydraulikventil erfolgen kann. Weiter ist auf diese Weise eine sehr kompakte Bauform für Hydraulikventile mit zwei Arbeitsanschlüssen zu verwirklichen. In einer dritten Schaltstellung kann der Kolben zusätzlich über den Stift mit Hilfe des Hydraulikfluids am Ventilgehäuse abgestützt werden, was das Regelungsverhalten des Hydraulikventils in dieser Schaltstellung ermöglicht.
Durch die Verwendung einer Stufenbohrung zusammen mit einem gestuften Kolben mit Steuernuten kann sich ein Druck des Hydraulikfluids auf die Differenz der beiden Wirkflächen der ersten Steuernut aufbauen, der in einer Kraft als Unterstützung der Magnetkraft auf den Kolben resultiert, die beide gegen eine Kraft der Feder arbeiten, welche an dem Ventilgehäuse abgestützt ist. Die Stellkraft auf die Differenz der beiden Wirkflächen ist dabei das Produkt aus einer effektiven Fläche, die sich aus der Differenz der beiden unterschiedlichen Durchmesser der Bohrung und damit der beiden Wirkflächen ergibt, und dem Druck des Hydraulikfluids in der Steuernut.

In einer vorteilhaften Ausgestaltung kann der Stift über eine mit der zweiten Steuernut verbundenen Bohrung an einer axial angeordneten Wirkfläche mit dem Hydraulikfluid beaufschlagbar sein und mit dem der Druckbeaufschlagung entgegen gerichteten Ende am Ventilgehäuse abgestützt sein. So kann sich ein Hydraulikdruck auf den Stift aufbauen, der damit eine Gegenkraft auf den Kolben entgegengesetzt zur Magnetkraft aufbaut. Der Kolben kann dadurch wieder zurückgeschoben werden, der Versorgungsanschluss wird zunehmend verschlossen, der Druck des Hydraulikfluids fällt, was den Regelkreis schließt.

Vorteilhaft kann die Wirkfläche des Stifts drucklos sein, solange die Magnetkraft kleiner oder gleich der Federkraft ist. In diesen Schaltstellungen ist der zweite Arbeitsanschluss drucklos, sodass darüber die Wirkfläche des Stifts auch nicht mit einem Druck des Hydraulikfluids beaufschlagt werden kann.

Weiter kann günstigerweise die hydraulische Verbindung des Stifts zur zweiten Steuernut druckbeaufschlagt sein, solange die Magnetkraft größer als die Federkraft ist, wobei eine Stellkraft des Stifts proportional zur Größe der Wirkfläche des Stifts sein kann. Wenn die Magnetkraft größer als die Federkraft ist, wird der zweite Arbeitsanschluss zum Versorgungsanschluss geöffnet, damit steigt der Druck im zweiten Arbeitsanschluss. Damit wird auch die Wirkfläche des Stifts mit Druck des Hydraulikfluids beaufschlagt.

In einer vorteilhaften Ausgestaltung kann die Bohrung beim Übergang vom ersten zum zweiten Abschnitt eine radial verlaufende Stufe aufweisen, welche in Längsrichtung zwischen dem Versorgungsanschluss und dem ersten Arbeitsanschluss angeordnet ist. Dadurch weisen die beiden die erste Steuernut begrenzenden Wirkflächen unterschiedliche Flächen auf, sodass das Hydraulikfluid in der Steuernut eine effektive Kraft auf die effektive Differenzfläche der beiden Wirkflächen ausüben kann, was beispielsweise in Richtung der ersten Wirkfläche erfolgt, wenn die erste Wirkfläche im Abschnitt der Bohrung mit dem größeren Durchmessers angeordnet ist und die zweite Wirkfläche im Abschnitt der Bohrung mit dem geringeren Durchmesser angeordnet ist.

Zweckmäßigerweise können der Versorgungsanschluss, die beiden Arbeitsanschlüsse sowie die beiden Tankabflüsse als radiale Bohrungen in dem Ventilgehäuse, die von der Außenseite des Ventilgehäuses bis zu der Bohrung reichen, ausgebildet sein. So ist ein möglichst störungsfreier Zu- und Ablauf des Hydraulikfluids zu den Steuernuten des Kolbens gegeben. Auch die Anschlüsse zu Steuerkomponenten des Getriebes, in dem das Hydraulikventil eingesetzt ist, sind so weitestgehend einfach und sicher zu gestalten und abzudichten.

Vorteilhaft kann das Hydraulikventil als Proportionaldruckminderventil ausgebildet sein, wobei eine Regelkraft auf den Kolben dadurch ausübbar ist, dass der Kolben über den Magnetaktor eine Kraft in Längsrichtung erfährt und über die Feder sowie die mit dem Hydraulikfluid beaufschlagten Wirkflächen ein Kräftegleichgewicht in der jeweiligen Regelstellung erzeugbar ist. Insbesondere kann die Regelkraft auf den Kolben in einer ersten Regelstellung dadurch ausgeübt werden, dass der Kolben über den Magnetaktor sowie die mit dem Hydraulikfluid beaufschlagten ersten Wirkflächen der ersten Steuernut eine Kraft in Längsrichtung erfährt und über die Feder mit einer Kraft in Gegenrichtung beaufschlagbar ist. In einer zweiten Regelstellung kann die Regelkraft auf den Kolben dadurch ausgeübt werden, dass der Kolben über den Magnetaktor eine Kraft in Längsrichtung erfährt und über die Feder mit einer Kraft in Gegenrichtung beaufschlagbar ist.

In einer dritten Regelstellung kann die Regelkraft auf den Kolben dadurch ausgeübt werden, dass der Kolben über den Magnetaktor eine Kraft in Längsrichtung erfährt und über die Feder sowie die mit dem Hydraulikfluid beaufschlagte Wirkfläche des Stifts mit einer Kraft in Gegenrichtung beaufschlagbar ist.

Ein Magnetaktor stellt eine sehr effektive Realisierung einer Antriebsquelle für ein Hydraulikventil dar. Damit können Druckminderventile mit Proportionalverhalten ausgestattet sein, da die Magnetkraft zum angelegten Strom proportional verläuft. Um einen Regelbetrieb zu verwirklichen, ist es nötig, eine entsprechende Gegenkraft zur Verfügung zu haben, was üblicherweise mit einer Feder, beispielsweise einer Schraubendruckfeder, realisiert werden kann. Die Stärke der Feder hängt dabei von den Systemparametern wie Drücke und Hübe ab. Bei dem erfindungsgemäßen Hydraulikventil wird zusätzlich über die erste Wirkfläche eine effektive Kraft durch den Druck des Hydraulikfluids parallel zur Magnetkraft auf den Kolben ausgeübt und andererseits eine Kraft in Gegenrichtung zur Magnetkraft, also parallel zur Federkraft, durch den Stift auf den Kolben ausgeübt. Dadurch wird ein Kräftegleichgewicht in der jeweiligen Regelstellung bewirkt. Durch die beschriebene Anordnung ist es für das Regelverhalten günstig, die Feder stärker als üblich auszulegen.

Während bei üblichen Druckregelventilen, bei denen Federn nur verwendet werden, um im unbestromten oder abgeschalteten Zustand eine definierte Stellung des Kolbens zu gewährleisten, Federkräfte von ca. 0,4 N bei einer Federkonstanten von ca. 0,2 N/mm verwendet werden, werden im erfindungsgemäßen Hydraulikventil Federn mit Federkräften von ca. 10 N bei Federkonstanten von ca. 7 N/mm verwendet. Auch der maximale Hub des Kolbens, der bei üblichen Hydraulikventilen ca. 1,5 mm beträgt, ist im erfindungsgemäßen Hydraulikventil wesentlich höher und liegt bei ca. 2,5 mm.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: einen Schnitt durch ein Hydraulikventil nach einem Ausführungsbeispiel der Erfindung in einer ersten Schaltstellung;
- Fig. 2: einen Schnitt durch das Hydraulikventil aus Fig. 1 in einer zweiten Schaltstellung;
- Fig. 3: einen Schnitt durch das Hydraulikventil aus Fig. 1 in einer dritten Schaltstellung; und
- Fig. 4: einen typischen Druckverlauf eines Hydraulikventils nach einem Ausführungsbeispiel der Erfindung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

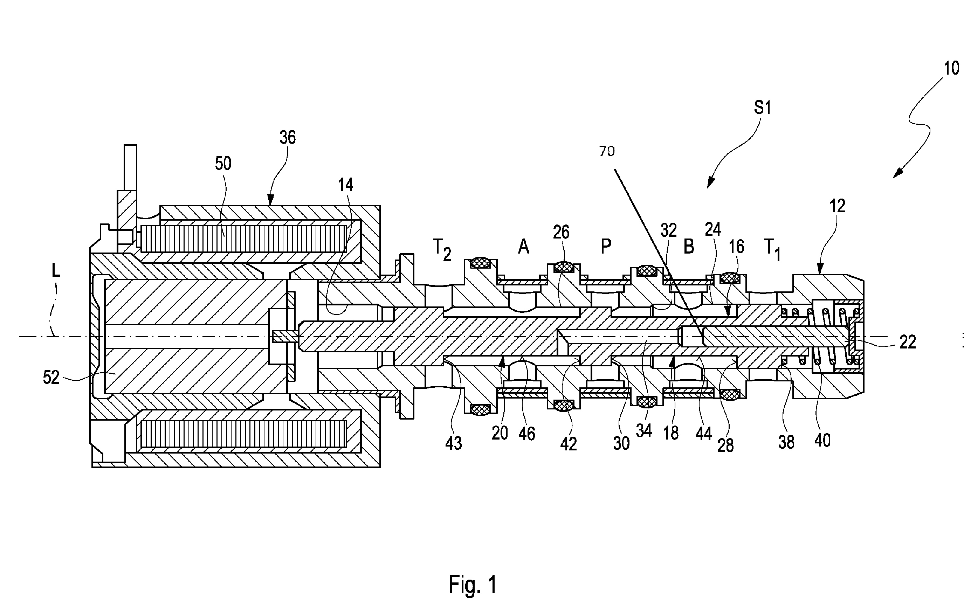

Figur 1 zeigt einen Schnitt durch ein Hydraulikventil 10 nach einem Ausführungsbeispiel der Erfindung in einer ersten Schaltstellung S1. Das Hydraulikventil 10 mit wenigstens zwei Schaltstellungen S1, S2, S3 umfasst ein Ventilgehäuse 12 mit einer Bohrung 14, die entlang ihrer Längsrichtung L Abschnitte 24, 26 mit unterschiedlichen Durchmessern aufweist, einen Versorgungsanschluss P zum Zuführen eines Hydraulikfluids, einen ersten Arbeitsanschluss B und einen zweiten Arbeitsanschluss A, sowie einen ersten Tankabfluss T1 und einen zweiten Tankabfluss T2 zum Ableiten des Hydraulikfluids. Weiter umfasst das Hydraulikventil 10 einen in der Bohrung 14 in deren Längsrichtung L angeordneten Kolben 16, der an einem Ende 38 mittels einer Feder 40, die eine Federkraft aufbringt, am Ventilgehäuse 12 abgestützt ist und mit einem Magnetaktor 36, der zum Aufbringen einer Magnetkraft vorgesehen ist, längsverschiebbar gekoppelt ist.

Dabei verbindet eine erste Steuernut 18 den ersten Arbeitsanschluss B wahlweise mit dem ersten Tankabfluss T1 oder mit dem Versorgungsanschluss P, und eine zweite Steuernut 20 den zweiten Arbeitsanschluss A wahlweise mit dem zweiten Tankabfluss T2 oder mit dem Versorgungsanschluss P. Weiter umfasst das Hydraulikventil 10 einen in Längsrichtung L des Kolbens 16 gegen diesen längsverschiebbar angeordneten Stift 22, der in wenigstens einer Schaltstellung S1, S2, S3 mit der Feder 40 zusammenwirkt, und der hydraulisch mit der zweiten Steuernut 20 verbunden ist. Dabei ist die erste Steuernut 18 durch erste Wirkflächen 28, 30 unterschiedlicher Größe begrenzt. Die größere der ersten Wirkflächen 28 ist in einem ersten Abschnitt 24 mit einem größeren Durchmesser angeordnet und die kleinere der ersten Wirkflächen 30 in einem zweiten Abschnitt 26 mit einem geringeren Durchmesser als im ersten Abschnitt 24 angeordnet. Die zweite Steuernut 20 ist durch zweite Wirkflächen 42, 43 begrenzt, die in dem Abschnitt 26 der Bohrung 14 mit geringerem Durchmesser angeordnet sind.

Das Hydraulikventil 10 weist drei Schaltstellungen S1, S2, S3 auf, wobei in einer ersten Schaltstellung S1 der erste Arbeitsanschluss B über den Versorgungsanschluss P mit dem Hydraulikfluid beaufschlagt wird und der zweite Arbeitsanschluss A mit dem zweiten Tankabfluss T2 verbunden ist. In einer zweiten Schaltstellung S2 ist der Versorgungsanschluss P durch den Kolben 16 verschlossen. Die beiden Tankabflüsse T1, T2 können je nach Auslegung des Hydraulikventils 10 durch den Kolben 16 verschlossen oder geöffnet sein, während in einer dritten Schaltstellung S3 der zweite Arbeitsanschluss A über den Versorgungsanschluss P mit dem Hydraulikfluid beaufschlagt wird und der erste Arbeitsanschluss B mit dem ersten Tankabfluss T1 verbunden ist.

Der Kolben 16 weist Steuerkanten 60, 62, 64, 66 auf, so dass bei entsprechender Positionierung in einer Regelstellung in Längsrichtung L der Versorgungsanschluss P sowie die beiden Tankabflüsse T1, T2 verschließbar sind, wobei in der Schaltstellung S1 die Steuerkante 62 des Kolbens 16 am Versorgungsanschluss P und die Steuerkante 60 des Kolbens 16 am Tankabfluss T1 gegensinnig mit Regelbewegungen zwischen einer geöffneten und geschlossenen Stellung pendeln sowie in der Schaltstellung S3 die Steuerkante 64 des Kolbens 16 am Versorgungsanschluss P und die Steuerkante 66 des Kolbens 16 am Tankabfluss T2 gegensinnig mit Regelbewegungen zwischen einer geöffneten und geschlossenen Stellung pendeln.

Über einen Druck des Hydraulikfluids auf die ersten Wirkflächen 28, 30 ist eine Bewegung des Kolbens 16 in Richtung der ersten Wirkfläche 28 steuerbar, wobei eine Stellkraft proportional zu einer Größendifferenz der ersten Wirkflächen 28, 30 ist.

Der Stift 22 ist über eine mit der zweiten Steuernut 20 verbundenen Bohrung 34 an einer axial angeordneten Wirkfläche 70 mit dem Hydraulikfluid beaufschlagbar und mit dem der Druckbeaufschlagung entgegen gerichteten Ende am Ventilgehäuse 12 abgestützt, wobei die Wirkfläche 70 des Stifts 22 drucklos ist, solange die Magnetkraft kleiner oder gleich der Federkraft ist. Die hydraulische Verbindung des Stifts 22 zur zweiten Steuernut 20 ist druckbeaufschlagt, solange die Magnetkraft größer als die Federkraft ist.

Die Grundfläche 44 der ersten Steuernut 18 weist über die gesamte Länge der ersten Steuernut 18 denselben Durchmesser auf, ebenso wie die Grundfläche 46 der zweiten Steuernut 20. Die Bohrung 14 weist beim Übergang vom ersten Abschnitt 24 zum zweiten Abschnitt 26 eine radial verlaufende Stufe 32 auf, welche in Längsrichtung L zwischen dem Versorgungsanschluss P und dem ersten Arbeitsanschluss B angeordnet ist. Der Versorgungsanschluss P, die beiden Arbeitsanschlüsse B, A sowie die beiden Tankabflüsse T1, T2 sind als radiale Bohrungen in dem Ventilgehäuse 12, die von der Außenseite des Ventilgehäuses 12 bis zu der Bohrung 14 reichen, ausgebildet.

Der Magnetaktor 36 umfasst eine Spule 50, welche bei Bestromung ein Magnetfeld erzeugt, das einen Anker 52 antreibt und in Längsrichtung L bewegt. Der Anker 52 wiederum ist mit dem Kolben 16 gekoppelt, sodass dieser der Bewegung des Ankers 52 folgt.

Das Hydraulikventil 10 ist so als Proportionaldruckminderventil ausgebildet, wobei eine Regelkraft auf den Kolben 16 dadurch ausübbar ist, dass der Kolben 16 über den Magnetaktor 36 eine Kraft in Längsrichtung L erfährt und über die Feder 40, welche bevorzugt als Schraubendruckfeder ausgebildet ist, sowie die mit dem Hydraulikfluid beaufschlagten Wirkflächen 28, 30, 70 ein Kräftegleichgewicht in der jeweiligen Regelstellung S1, S2, S3 erzeugt wird. Insbesondere wird die Regelkraft auf den Kolben 16 in der Regelstellung S1 dadurch ausgeübt, dass der Kolben 16 über den Magnetaktor 36 sowie die mit dem Hydraulikfluid beaufschlagten ersten Wirkflächen 28, 30 der ersten Steuernut 18 eine Kraft in Längsrichtung L erfährt und über die Feder 40 und die beaufschlagte Wirkfläche 70 des Stifts 22 mit einer Kraft in Gegenrichtung beaufschlagbar ist.

In Figur 1 ist das Hydraulikventil 10 in der ersten Schaltstellung S1 dargestellt. Durch die Verwendung einer Bohrung 14 als Stufenbohrung zusammen mit einem gestuften Kolben 16 mit Steuernuten 18, 20 kann sich ein Druck des Hydraulikfluids auf die Differenz der ersten Wirkfläche 28 und der zweiten Wirkfläche 30 der ersten Steuernut 18 aufbauen, der in einer Kraft als Unterstützung der Magnetkraft auf den Kolben 16 resultiert, die beide gegen eine Kraft der Feder 40 arbeiten, welche an dem Ventilgehäuse 12 abgestützt ist.

Die Stellkraft auf die erste Wirkfläche 28 ist dabei das Produkt aus einer effektiven Fläche, die sich aus der Differenz der beiden unterschiedlichen Durchmesser in den beiden Abschnitten 24, 26 der Bohrung 14 und damit der Wirkflächen 28, 30 ergibt, und dem Druck des Hydraulikfluids in der Steuernut 18. Bei zunehmender Kraft wird der Versorgungsanschluss P zunehmend verschlossen, der Druck des Hydraulikfluids sinkt, die Kraft auf den Kolben 16 sinkt damit ebenfalls. Der Kolben 16 wird wieder gegen die Magnetkraft bewegt, der Versorgungsanschluss P öffnet und der Druck steigt. So ist der Regelkreis geschlossen. Auf diese Weise kann der Druck des Hydraulikfluids über die Steuerkanten 60, 62 der Wirkflächen 28, 30 der Steuernut 18 geregelt werden.

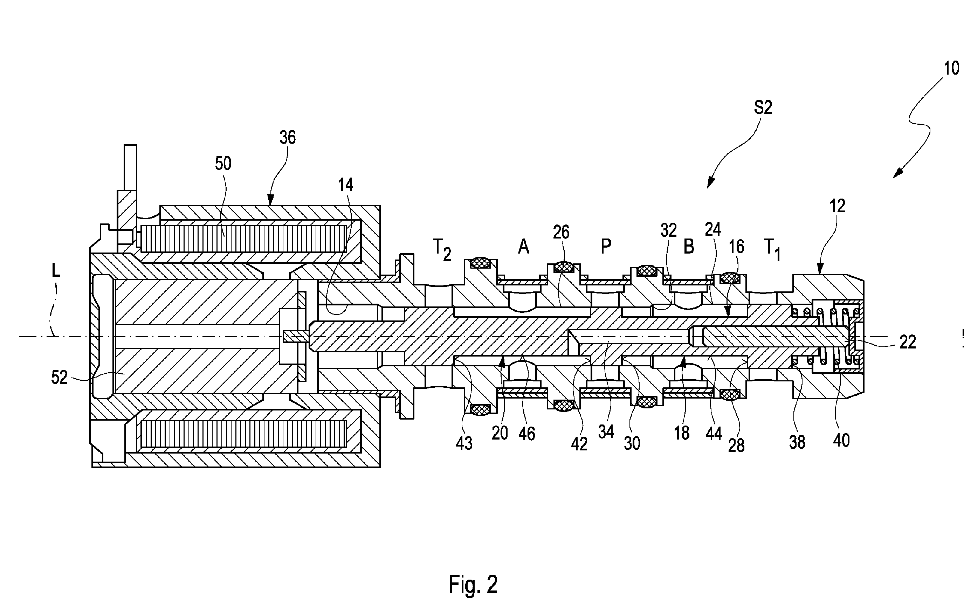

Figur 2 zeigt im Vergleich dazu einen Schnitt durch das Hydraulikventil 10 aus Figur 1 in einer zweiten Schaltstellung S2. Die Regelkraft auf den Kolben 16 wird in der Regelstellung S2 dadurch ausgeübt, dass der Kolben 16 über den Magnetaktor 36 eine Kraft in Längsrichtung L erfährt und über die Feder 40 mit einer Kraft in Gegenrichtung beaufschlagbar ist. Der Kolben 16 ist dabei weiter in Längsrichtung L von dem Magnetaktor 36 weg bewegt. Mit zunehmendem Ansteigen der Magnetkraft auf den Kolben 16 und damit einer Auslenkung des Kolbens 16 aus der Grundstellung wird der Versorgungsanschluss P verschlossen, die Arbeitsanschlüsse B, A werden in Richtung der Tankabflüsse T1, T2 geöffnet, und damit fällt der Druck in den Arbeitsanschlüssen B, A auf Null und damit wird auch durch die Differenz der Wirkflächen 28, 30 keine Kraft auf den Kolben 16 mehr ausgeübt.

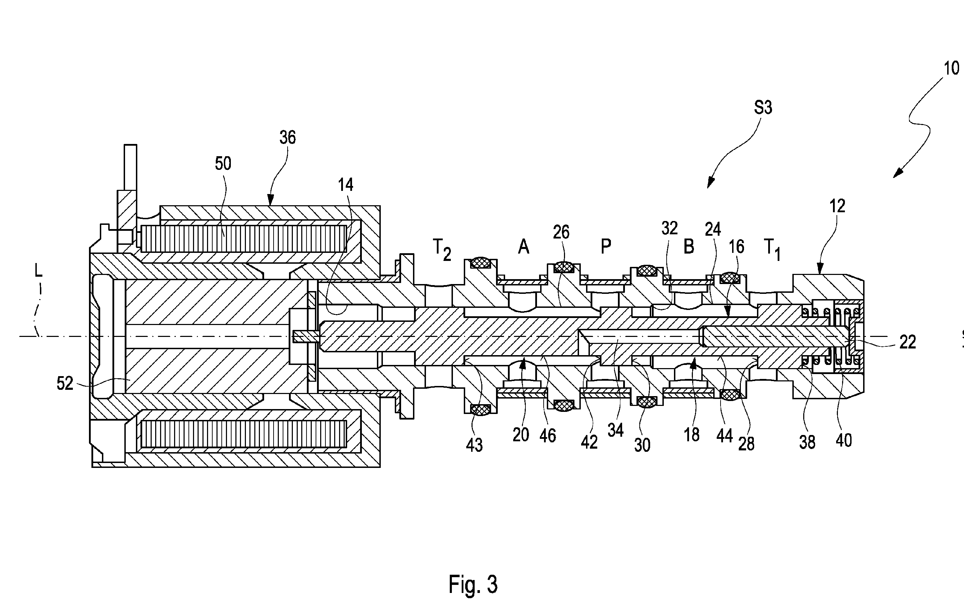

In Figur 3 ist ein Schnitt durch das Hydraulikventil 10 aus Figur 1 in einer dritten Schaltstellung S3 dargestellt. Die Regelkraft auf den Kolben 16 wird in der Regelstellung S3 dadurch ausgeübt, dass der Kolben 16 über den Magnetaktor 36 eine Kraft in Längsrichtung L erfährt und über die Feder 40 sowie die mit dem Hydraulikfluid beaufschlagte Wirkfläche 70 des Stifts 22 mit einer Kraft in Gegenrichtung beaufschlagbar ist. Der Kolben 16 ist hier in seiner maximalen Auslenkung weg von dem Magnetaktor 36 dargestellt. Mit weiter steigendem Ansteigen der Magnetkraft auf den Kolben 16 und damit einer weiteren Auslenkung des Kolbens 16 weg von der Grundstellung öffnet sich der Versorgungsanschluss P wieder in Richtung des zweiten Arbeitsanschlusses A; der Druck in der zweiten Steuernut 20, welche den Arbeitsanschluss A versorgt, steigt an, was zu einem Anstieg des Drucks in einer Bohrung 34 führt, welche von der zweiten Steuernut 20 abgeht und den in der Längsrichtung L des Kolbens 16 verschiebbaren Stift 22 stirnseitig versorgt, der sich mit dem anderen Ende am Ventilgehäuse 12 abstützt. So kann sich ein Hydraulikdruck auf den die Wirkfläche 70 des Stifts 22 aufbauen, der damit eine Gegenkraft auf den Kolben 16 entgegengesetzt zur Magnetkraft aufbaut. Der Kolben 16 wird dadurch wieder zurückgeschoben, der Versorgungsanschluss P wird zunehmend verschlossen, der Druck des Hydraulikfluids fällt, was den Regelkreis schließt.

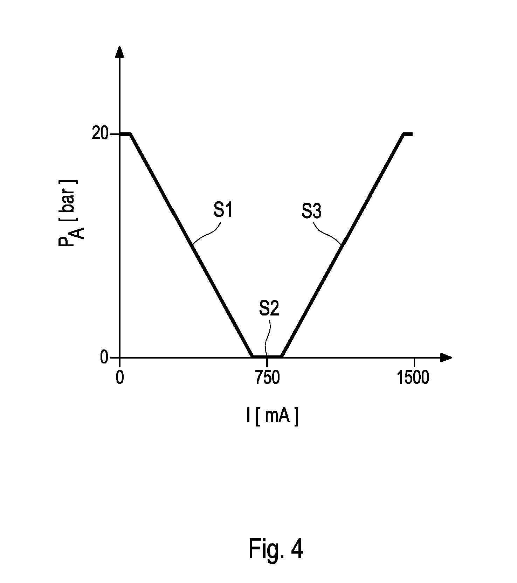

Figur 4 zeigt dazu einen typischen Druckverlauf eines Hydraulikventils 10 nach einem Ausführungsbeispiel der Erfindung. In dem dargestellten Diagramm ist ein typischer Arbeitsdruck P_{A} in einem der beiden Arbeitsanschlüsse B, A, je nach Schaltstellung des Hydraulikventils 10, als Funktion des an dem Magnetaktor 36 eingestellten Stroms I dargestellt. In der Schaltstellung S1 entspricht P_{A} dem Druck im ersten Arbeitsanschluss B. Der Druck P_{A} fällt mit zunehmender Bestromung des Magnetaktors 36 von einem maximalen Druck von 20 bar steil ab, bis er bei einem Strom von 750 mA auf Null ist. In diesem Zustand ist die Schaltstellung S2 erreicht, wo der Versorgungsanschluss P verschlossen ist und die beiden Arbeitsanschlüsse B, A zu den Tankabflüssen T1, T2 geöffnet sind. Bei weiter zunehmender Bestromung wird die Schaltstellung S3 erreicht, in der der Versorgungsanschluss P zu dem zweiten Arbeitsanschluss A zunehmend geöffnet wird und so der Druck P_{A} im zweiten Arbeitsanschluss A mit zunehmender Bestromung des Magnetaktors weiter ansteigt, bis er bei maximaler Bestromung des Magnetaktors 36 von 1500 mA einen maximalen Wert von 20 bar erreicht. Der Druckbereich kann dabei durch Anpassungen der Wirkflächen 28, 30, 70 auf einfache Weise variiert werden.

## Patentansprüche

1. Hydraulikventil (10) mit wenigstens zwei Schaltstellungen (S1, S2, S3), umfassend
- ein Ventilgehäuse (12) mit einer Bohrung (14), die entlang ihrer Längsrichtung (L) Abschnitte (24, 26) mit unterschiedlichen Durchmessern aufweist,
- einen Versorgungsanschluss (P) zum Zuführen eines Hydraulikfluids,
- wenigstens einen ersten Arbeitsanschluss (B) und einen zweiten Arbeitsanschluss (A),
- wenigstens einen ersten Tankabfluss (T1) und einen zweiten Tankabfluss (T2) zum Ableiten des Hydraulikfluids,
- einen in der Bohrung (14) in deren Längsrichtung (L) angeordneten Kolben (16), der an einem Ende (38) mittels einer Feder (40), die eine Federkraft aufbringt, am Ventilgehäuse (12) abgestützt ist und mit einem Magnetaktor (36), der zum Aufbringen einer Magnetkraft vorgesehen ist, längsverschiebbar gekoppelt ist,
- wobei eine erste Steuernut (18) den ersten Arbeitsanschluss (B) wahlweise mit dem ersten Tankabfluss (T1) oder mit dem Versorgungsanschluss (P) verbindet,
- und eine zweite Steuernut (20) den zweiten Arbeitsanschluss (A) wahlweise mit dem zweiten Tankabfluss (T2) oder mit dem Versorgungsanschluss (P) verbindet,
**dadurch gekennzeichnet, dass** das Hydraulikventil umfasst
- einen in Längsrichtung (L) des Kolbens (16) gegen diesen längsverschiebbar angeordneten Stift (22), der in wenigstens einer Schaltstellung (S1, S2, S3) mit der Feder (40) zusammenwirkt, und der hydraulisch mit der zweiten Steuernut (20) verbunden ist,
wobei die erste Steuernut (18) durch erste Wirkflächen (28, 30) unterschiedlicher Größe begrenzt ist und wobei die größere der ersten Wirkflächen (28) in einem ersten Abschnitt (24) mit einem größeren Durchmesser angeordnet ist und die kleinere der ersten Wirkflächen (30) in einem zweiten Abschnitt (26) mit einem geringeren Durchmesser als im ersten Abschnitt (24) angeordnet ist und die zweite Steuernut (20) durch zweite Wirkflächen (42, 43) begrenzt ist, die in dem Abschnitt (26) der Bohrung (14) mit geringerem Durchmesser angeordnet sind.

2. Hydraulikventil nach Anspruch 1, wobei das Hydraulikventil wenigstens drei Schaltstellungen (S1, S2, S3) aufweist, wobei in einer ersten Schaltstellung (S1) der erste Arbeitsanschluss (B) über den Versorgungsanschluss (P) mit dem Hydraulikfluid beaufschlagt wird und der zweite Arbeitsanschluss (A) mit dem zweiten Tankabfluss (T2) verbunden ist, wobei in einer zweiten Schaltstellung (S2) der Versorgungsanschluss (P) durch den Kolben (16) verschlossen sowie die beiden Tankabflüsse (T1, T2) durch den Kolben (16) verschlossen oder geöffnet sind, wobei in einer dritten Schaltstellung (S3) der zweite Arbeitsanschluss (A) über den Versorgungsanschluss (P) mit dem Hydraulikfluid beaufschlagt wird und der erste Arbeitsanschluss (B) mit dem ersten Tankabfluss (T1) verbunden ist.

3. Hydraulikventil nach Anspruch 1 oder 2, wobei der Kolben (16) Steuerkanten (60, 62, 64, 66) aufweist, so dass bei entsprechender Positionierung in einer Regelstellung in Längsrichtung (L) der Versorgungsanschluss (P) sowie die beiden Tankabflüsse (T1, T2) verschließbar sind, wobei in der Schaltstellung (S1) die Steuerkante (62) des Kolbens (16) am Versorgungsanschluss (P) und die Steuerkante (60) des Kolbens (16) am Tankabfluss (T1) gegensinnig mit Regelbewegungen zwischen einer geöffneten und geschlossenen Stellung pendeln sowie in der Schaltstellung (S3) die Steuerkante (64) des Kolbens (16) am Versorgungsanschluss (P) und die Steuerkante (66) des Kolbens (16) am Tankabfluss (T2) gegensinnig mit Regelbewegungen zwischen einer geöffneten und geschlossenen Stellung pendeln.

4. Hydraulikventil nach einem der vorhergehenden Ansprüche, wobei über einen Druck des Hydraulikfluids auf die ersten Wirkflächen (28, 30) eine Bewegung des Kolbens (16) in Richtung der ersten Wirkfläche (28) steuerbar ist.

5. Hydraulikventil nach Anspruch 4, wobei eine Stellkraft proportional zu einer Größendifferenz der ersten Wirkflächen (28, 30) ist.

6. Hydraulikventil nach einem der vorhergehenden Ansprüche, wobei der Stift (22) über eine mit der zweiten Steuernut (20) verbundenen Bohrung (34) an einer axial angeordneten Wirkfläche (70) mit dem Hydraulikfluid beaufschlagbar ist und mit dem der Druckbeaufschlagung entgegen gerichteten Ende am Ventilgehäuse (12) abgestützt ist.

7. Hydraulikventil nach Anspruch 6, wobei die Wirkfläche (70) des Stifts (22) drucklos ist, solange die Magnetkraft kleiner oder gleich der Federkraft ist.

8. Hydraulikventil nach einem der Ansprüche 6 oder 7, wobei die hydraulische Verbindung des Stifts (22) zur zweiten Steuernut (20) druckbeaufschlagt ist, solange die Magnetkraft größer als die Federkraft ist.

9. Hydraulikventil nach einem der Ansprüche 6, 7 oder 8, wobei eine Stellkraft des Stifts (22) proportional zur Größe der Wirkfläche (70) des Stifts (22) ist.

10. Hydraulikventil nach einem der vorhergehenden Ansprüche, wobei die Bohrung (14) beim Übergang vom ersten Abschnitt (24) zum zweiten Abschnitt (26) eine radial verlaufende Stufe (32) aufweist, welche in Längsrichtung (L) zwischen dem Versorgungsanschluss (P) und dem ersten Arbeitsanschluss (B) angeordnet ist.

11. Hydraulikventil nach einem der vorhergehenden Ansprüche, wobei der Versorgungsanschluss (P), die beiden Arbeitsanschlüsse (B, A) sowie die beiden Tankabflüsse (T1, T2) als radiale Bohrungen in dem Ventilgehäuse (12), die von der Außenseite des Ventilgehäuses (12) bis zu der Bohrung (14) reichen, ausgebildet sind.

12. Hydraulikventil nach einem der vorhergehenden Ansprüche, wobei das Hydraulikventil als Proportionaldruckminderventil ausgebildet ist, wobei eine Regelkraft auf den Kolben (16) dadurch ausübbar ist, dass der Kolben (16) über den Magnetaktor (36) eine Kraft in Längsrichtung (L) erfährt und über die Feder (40) sowie die mit dem Hydraulikfluid beaufschlagten Wirkflächen (28, 30, 70) ein Kräftegleichgewicht in der jeweiligen Regelstellung (S1, S2, S3) erzeugbar ist.

13. Hydraulikventil nach Anspruch 12, wobei die Regelkraft auf den Kolben (16) in der Regelstellung (S1) dadurch ausübbar ist, dass der Kolben (16) über den Magnetaktor (36) sowie die mit dem Hydraulikfluid beaufschlagten ersten Wirkflächen (28, 30) der ersten Steuernut (18) eine Kraft in Längsrichtung (L) erfährt und über die Feder (40) mit einer Kraft in Gegenrichtung beaufschlagbar ist.

14. Hydraulikventil nach Anspruch 12 oder 13, wobei die Regelkraft auf den Kolben (16) in der Regelstellung (S2) dadurch ausübbar ist, dass der Kolben (16) über den Magnetaktor (36) eine Kraft in Längsrichtung (L) erfährt und über die Feder (40) mit einer Kraft in Gegenrichtung beaufschlagbar ist.

15. Hydraulikventil nach einem der Ansprüche 12 bis 14, wobei die Regelkraft auf den Kolben (16) in der Regelstellung (S3) dadurch ausübbar ist, dass der Kolben (16) über den Magnetaktor (36) eine Kraft in Längsrichtung (L) erfährt und über die Feder (40) sowie die mit dem Hydraulikfluid beaufschlagte Wirkfläche (70) des Stifts (22) mit einer Kraft in Gegenrichtung beaufschlagbar ist.

## Claims

1. Hydraulic valve (10) having at least two switching positions (S1, S2, S3), comprising
- a valve housing (12) with a bore (14) which has sections (24, 26) with different diameters along its longitudinal direction (L),
- a supply connector (P) for feeding in a hydraulic fluid,
- at least one first working connector (B) and one second working connector (A),
- at least one first tank outlet (T1) and one second tank outlet (T2) for discharging the hydraulic fluid,
- a piston (16) which is arranged in the bore (14) in its longitudinal direction (L), is supported on the valve housing (12) at one end (38) by means of a spring (40) which applies a spring force, and is coupled longitudinally displaceably to a magnet actuator (36) which is provided for applying a magnetic force,
- a first control groove (18) connecting the first working connector (B) selectively to the first tank outlet (T1) or to the supply connector (P),
- and a second control groove (20) connecting the second working connector (A) selectively to the second tank outlet (T2) or to the supply connector (P),
**characterized in that** the hydraulic valve comprises
- a pin (22) which is arranged in the longitudinal direction (L) of the piston (16) such that it can be displaced longitudinally with respect to the latter, which pin (22) interacts with the spring (40) in at least one switching position (S1, S2, S3) and is connected hydraulically to the second control groove (20),
the first control groove (18) being delimited by way of first active faces (28, 30) of different size, and the larger of the first active faces (28) being arranged in a first section (24) with a greater diameter, and the smaller of the first active faces (30) being arranged in a second section (26) with a smaller diameter than in the first section (24), and the second control groove (20) being delimited by way of second active faces (42, 43) which are arranged in the section (26) of the bore (14) with a smaller diameter.

2. Hydraulic valve according to Claim 1, the hydraulic valve having at least three switching positions (S1, S2, S3), the first working connector (B) being loaded with the hydraulic fluid via the supply connector (P) and the second working connector (A) being connected to the second tank outlet (T2) in a first switching position (S1), the supply connector (P) being closed by way of the piston (16) and the two tank outlets (T1, T2) being closed or open by way of the piston (16) in a second switching position (S2), and the second working connector (A) being loaded with the hydraulic fluid via the supply connector (P) and the first working connector (B) being connected to the first tank outlet (T1) in a third switching position (S3).

3. Hydraulic valve according to Claim 1 or 2, the piston (16) having control edges (60, 62, 64, 66), with the result that the supply connector (P) and the two tank outlets (T1, T2) can be closed in the case of corresponding positioning in a control position in the longitudinal direction (L), the control edge (62) of the piston (16) at the supply connector (P) and the control edge (60) of the piston (16) at the tank outlet (T1) shuttling in opposite directions with control movements between an open and a closed position in the switching position (S), and the control edge (64) of the piston (16) at the supply connector (P) and the control edge (66) of the piston (16) at the tank outlet (T2) shuttling in opposite directions with control movements between an open and closed position in the switching position (S3).

4. Hydraulic valve according to one of the preceding claims, it being possible for a movement of the piston (16) in the direction of the first active face (28) to be controlled via a pressure of the hydraulic fluid on the first active faces (28, 30).

5. Hydraulic valve according to Claim 4, an actuating force being proportional to a difference in size of the first active faces (28, 30).

6. Hydraulic valve according to one of the preceding claims, it being possible for the pin (22) to be loaded on an axially arranged active face (70) with the hydraulic fluid via a bore (34) which is connected to the second control groove (20) and the said pin (22) being supported on the valve housing (12) by way of the end which is directed counter to the pressure loading.

7. Hydraulic valve according to Claim 6, the active face (70) of the pin (22) being pressureless as long as the magnetic force is smaller than or equal to the spring force.

8. Hydraulic valve according to either of Claims 6 and 7, the hydraulic connection of the pin (22) to the second control groove (20) being loaded with pressure as long as the magnetic force is greater than the spring force.

9. Hydraulic valve according to one of Claims 6, 7 or 8, an actuating force of the pin (22) being proportional to the size of the active face (70) of the pin (22).

10. Hydraulic valve according to one of the preceding claims, the bore (14) having a radially running step (32) at the transition from the first section (24) to the second section (26), which radially running step (32) is arranged in the longitudinal direction (L) between the supply connector (P) and the first working connector (B).

11. Hydraulic valve according to one of the preceding claims, the supply connector (P), the two working connectors (B, A) and the two tank outlets (T1, T2) being configured as radial bores in the valve housing (12) which reach from the outer side of the valve housing (12) as far as the bore (14).

12. Hydraulic valve according to one of the preceding claims, the hydraulic valve being configured as a proportional pressure reducing valve, it being possible for a control force to be exerted on the piston (16) by virtue of the fact that the piston (16) experiences a force in the longitudinal direction (L) via the magnet actuator (36), and a force equilibrium can be produced in the respective control position (S1, S2, S3) via the spring (40) and the active faces (28, 30, 70) which are loaded with the hydraulic fluid.

13. Hydraulic valve according to Claim 12, it being possible for the control force to be exerted on the piston (16) in the control position (S1) by virtue of the fact that the piston (16) experiences a force in the longitudinal direction (L) via the magnet actuator (36) and the first active faces (28, 30) of the first control groove (18) which are loaded with the hydraulic fluid, and can be loaded in the opposite direction with a force via the spring (40).

14. Hydraulic valve according to Claim 12 or 13, it being possible for the control force to be exerted on the piston (16) in the control position (S2) by virtue of the fact that the piston (16) experiences a force in the longitudinal direction (L) via the magnet actuator (36), and can be loaded with a force in the opposite direction via the spring (40).

15. Hydraulic valve according to one of Claims 12 to 14, it being possible for the control force to be exerted on the piston (16) in the control position (S3) by virtue of the fact that the piston (16) experiences a force in the longitudinal direction (L) via the magnet actuator (36), and can be loaded with a force in the opposite direction via the spring (40) and that active face (70) of the pin (22) which is loaded with the hydraulic fluid.

## Revendications

1. Vanne hydraulique (10) avec au moins deux positions de commutation (S1, S2, S3), comprenant :
- un carter de vanne (12) avec un alésage (14) comportant le long de sa direction longitudinale (L) des sections (24, 26) avec différents diamètres ;
- un raccord d'alimentation (P) pour amener un fluide hydraulique ;
- au moins un premier raccord de travail (B) et un deuxième raccord de travail (A) ;
- au moins un premier orifice d'écoulement de réservoir (T1) et un deuxième orifice d'écoulement de réservoir (T2) pour évacuer le fluide hydraulique ;
- un piston (16) disposé dans l'alésage (14) dans sa direction longitudinale (L), ledit piston étant maintenu au niveau du carter de vanne (12), au niveau d'une extrémité (38), au moyen d'un ressort (40) appliquant une force de ressort et étant couplé à un actionneur magnétique (36) de façon à pouvoir se déplacer dans le sens longitudinal pour appliquer une force magnétique ;
- une première rainure de commande (18) reliant le premier raccord de travail (B) au choix au premier orifice d'écoulement de réservoir (T1) ou au raccord d'alimentation (P) ;
- et une deuxième rainure de commande (20) reliant le deuxième raccord de travail (A) au choix au deuxième orifice d'écoulement de réservoir (T2) ou au raccord d'alimentation (P) ;
**caractérisée en ce que** la vanne hydraulique comprend :
- une tige (22) disposée de façon à pouvoir être déplacée dans le sens longitudinal à l'encontre du piston (16) dans la direction longitudinale (L) de celui-ci, ladite tige interagissant dans au moins une position de commutation (S1, S2, S3) avec le ressort (40) et étant reliée sur le plan hydraulique à la deuxième rainure de commande (20) ;
la première rainure de commande (18) étant délimitée par des premières surfaces actives (28, 30) de taille différente et la plus grande des premières surfaces actives (28) étant disposée dans une première section (24) avec un plus grand diamètre et la plus petite des premières surfaces actives (30) étant disposée dans une deuxième section (26) de diamètre plus réduit que la première section (24) et la deuxième rainure de commande (20) étant délimitée par les deuxièmes surfaces actives (42, 43) disposées dans la section (26) de l'alésage (14) de diamètre plus réduit.

2. Vanne hydraulique selon la revendication 1, la vanne hydraulique comportant au moins trois positions de commutation (S1, S2, S3), le premier raccord de travail (B) étant alimenté en fluide hydraulique par le raccord d'alimentation (P) dans une première position de commutation (S1) et le deuxième raccord de travail (A) étant relié au deuxième orifice d'écoulement de réservoir (T2), le raccord d'alimentation (P) étant fermé par le piston (16) dans une deuxième position de commutation (S2) et les deux orifices d'écoulement de réservoir (T1, T2) étant fermés ou ouverts par le piston (16), le deuxième raccord de travail (A) étant alimenté en fluide hydraulique via le raccord d'alimentation (P) et le premier raccord de travail (B) étant relié au premier orifice d'écoulement de réservoir (T1) dans une troisième position de commutation (S3).

3. Vanne hydraulique selon la revendication 1 ou 2, le piston (16) comportant des arêtes de commande (60, 62, 64, 66) de sorte qu'en cas de positionnement correspondant dans une position de réglage dans la direction longitudinale (L), le raccord d'alimentation (P) ainsi que les deux orifices d'écoulement de réservoir (T1, T2) peuvent être refermés, sachant que dans la position de commutation (S1), l'arête de commande (62) du piston (16) effectue un mouvement de balancier au niveau du raccord d'alimentation (P) et que l'arête de commande (60) du piston (16) effectue un mouvement de balancier au niveau de l'orifice d'écoulement de réservoir (T1) dans le sens contraire avec des mouvements de réglage entre une position ouverte et fermée et que dans la position de commutation (S3), l'arête de commande (64) du piston (16) effectue un mouvement de balancier au niveau du raccord d'alimentation (P) et que l'arête de commande (66) du piston (16) effectue un mouvement de balancier au niveau de l'orifice d'écoulement de réservoir (T2) dans le sens contraire avec des mouvements de réglage entre une position ouverte et fermée.

4. Vanne hydraulique selon l'une quelconque des revendications précédentes, un mouvement du piston (16) pouvant être commandé via une pression du fluide hydraulique sur les premières surfaces actives (28, 30) en direction de la première surface active (28).

5. Vanne hydraulique selon la revendication 4, une force de placement étant proportionnelle à une différence de taille des premières surfaces actives (28, 30).

6. Vanne hydraulique selon l'une quelconque des revendications précédentes, la tige (22) pouvant être alimentée en fluide hydraulique via un alésage (34) relié à la deuxième rainure de commande (20) au niveau d'une surface active (70) disposée dans le plan axial et étant maintenue au niveau du carter de vanne (12) avec l'extrémité orientée à l'encontre de l'alimentation en pression.

7. Vanne hydraulique selon la revendication 6, la surface active (70) de la tige (22) étant sans pression tant que la force magnétique est inférieure ou égale à la force de ressort.

8. Vanne hydraulique selon l'une quelconque des revendications 6 ou 7, la liaison hydraulique de la tige (22) d'avec la deuxième rainure de commande (20) étant alimentée en pression tant que la force magnétique est supérieure à la force de ressort.

9. Vanne hydraulique selon l'une quelconque des revendications 6, 7 ou 8, une force de placement de la tige (22) étant proportionnelle à la taille de la surface active (70) de la tige (22).

10. Vanne hydraulique selon l'une quelconque des revendications précédentes, l'alésage (14) comportant une marche (32) s'étendant dans le plan radial au niveau de la transition de la première section (24) à la deuxième section (26), ladite marche étant disposée dans la direction longitudinale (L) entre le raccord d'alimentation (P) et le premier raccord de travail (B).

11. Vanne hydraulique selon l'une quelconque des revendications précédentes, le raccord d'alimentation (P), les deux raccords de travail (B, A) ainsi que les deux orifices d'écoulement de réservoir (T1, T2) étant réalisés sous la forme d'alésages radiaux dans le carter de vanne (12) allant du côté extérieur du carter de vanne (12) à l'alésage (14).

12. Vanne hydraulique selon l'une quelconque des revendications précédentes, la vanne hydraulique étant réalisée sous la forme d'une vanne de détente de pression proportionnelle, une force de réglage pouvant être exercée sur le piston (16) en ce que le piston (16) est soumis à une force dans la direction longitudinale (L) via l'actionneur magnétique (36) et qu'un équilibre des forces peut être produit dans la position de réglage (S1, S2, S3) respective via le ressort (40) ainsi que les surfaces actives (28, 30, 70) alimentées en fluide hydraulique.

13. Vanne hydraulique selon la revendication 12, la force de réglage pouvant être exercée sur le piston (16) dans la position de réglage (S1) en ce que le piston (16) est soumis à une force dans la direction longitudinale (L) via l'actionneur magnétique (36) et les premières surfaces actives (28, 30) de la première rainure de commande (18) alimentées en fluide hydraulique et peut être chargé avec une force dans la direction opposée via le ressort (40).

14. Vanne hydraulique selon la revendication 12 ou 13, la force de réglage pouvant être exercée sur le piston (16) dans la position de réglage (S2) en ce que le piston (16) est soumis à une force dans la direction longitudinale (L) via l'actionneur magnétique (36) et peut être chargé avec une force dans la direction opposée via le ressort (40).

15. Vanne hydraulique selon l'une quelconque des revendications 12 à 14, la force de réglage pouvant s'exercer sur le piston (16) dans la position de réglage (S3) en ce que le piston (16) est soumis à une force dans la direction longitudinale (L) via l'actionneur magnétique (36) et est chargé avec une force dans la direction opposée via le ressort (40) ainsi que la surface active (70) de la tige (22) alimentée en fluide hydraulique.
